# DEMANDE DE BREVET EUROPEEN

(11) **EP 4 218 966 A1**
(43) Date de publication de la demande: **02.08.2023**
(21) Numéro de dépôt: 22154056.0
(22) Date de dépôt: 28.01.2022
(51) Int. Cl.: A63C 5/16, A63C 5/06, A63C 5/025, B62B 13/12

(54) **DISPOSITIF DE TRANSPORT À SKIS NON MOTORISÉ POUR TRANSPORTER UNE PERSONNE EN POSITION DE DEBOUT**

(71) Demandeur: Snowskut, 69570 Dardilly (FR)
(72) Inventeur: GOSTOLI, Marc, 07700 SAINT MARTIN D'ARDECHE (FR)
(74) Mandataire: Germain Maureau

(57) **Abrégé**

Ce dispositif de transport non motorisé (2) comprend des premier et deuxième skis (3, 4) ; des premiers pieds de fixation avant et arrière (7, 8) fixés sur le premier ski (3) et des deuxièmes pieds de fixation avant et arrière (9, 11) fixés sur le deuxième ski (4) ; une poutre longitudinale (12) ; un manche de prise de carres (27) fixé à la poutre longitudinale (12) ; et un système de liaison (14) reliant la poutre longitudinale (12) aux premier et deuxième pieds de fixation avant et arrière, le système de liaison (14) comportant des première et deuxième bielles avant (16, 17) comportant chacune une portion médiane montée pivotante sur la poutre longitudinale (12) autour d'un axe d'articulation avant respectif et des première et deuxième portions d'extrémité qui sont reliées respectivement aux premier et deuxième pieds de fixation avant (7, 9) par des liaisons à rotule avant (18) respectives, et une bielle arrière (15) comportant une portion médiane montée pivotante sur la poutre longitudinale (12) autour d'un axe d'articulation arrière et des première et deuxième portions d'extrémité reliées respectivement aux premier et deuxième pieds de fixation arrière (8, 11) par des liaisons à rotule arrière (19) respectives.

## Description

La présente invention concerne un dispositif de transport non motorisé destiné à transporter une personne, et notamment une personne à mobilité réduite ou handicapée, en position debout sur une piste enneigée.

Il est connu de transporter une personne à mobilité réduite ou handicapée sur une piste enneigée en position assise à l'aide d'un dispositif de transport non motorisé comprenant notamment :
- un premier ski et un deuxième ski qui sont sensiblement parallèles et qui sont destinés à prendre appui sur le sol, les premier et deuxième skis comportant respectivement un premier dispositif de fixation et un deuxième dispositif de fixation,
- un siège agencé pour accueillir la personne à transporter, et
- un système de liaison configuré pour relier le siège aux premier et deuxième skis, le système de liaison comprenant une poutre longitudinale sur laquelle est monté le siège, deux bielles sensiblement parallèles s'étendant transversalement à la poutre longitudinale, et des première et deuxième semelles de fixation fixées respectivement sur les premier et deuxième dispositifs de fixation.

Chaque bielle présente une portion centrale montée pivotante sur la poutre longitudinale autour d'un axe d'articulation central respectif et des première et deuxième portions d'extrémité montées pivotantes respectivement sur les première et deuxième semelles de fixation autour d'axes d'articulation latéraux respectifs.

Une telle configuration du système de liaison entraîne, durant un virage lors d'une descente sur une piste enneigée, un pivotement des bielles par rapport à la poutre longitudinale autour des axes d'articulation centraux et un pivotement des première et deuxième semelles de fixation par rapport aux bielles autour des axes d'articulation latéraux. Il en résulte un déplacement différentiel vertical entre les premier et deuxième skis, ce qui correspond à une prise de carres dans un trajet en traversée et assure la stabilité d'un tel dispositif de transport.

Cependant, le pilotage du dispositif de transport précité est malaisé lorsque ce dernier est utilisé pour effectuer des descentes à forte pente nécessitant des traversées importantes et la prise de virages à faibles rayons de courbure.

De plus, le dispositif de transport précité est uniquement dédié au transport d'une personne en position assise.

La présente invention vise à remédier à ces inconvénients.

Le problème technique à la base de l'invention consiste donc à fournir un dispositif de transport non motorisé configuré pour transporter une personne en position debout sur une piste enseignée, qui soit de structure simple et économique, tout en présentant une maniabilité améliorée et en conférant à la personne transportée une sensation de glisse améliorée.

A cet effet, la présente invention concerne un dispositif de transport non motorisé pour transporter une personne, et par exemple une personne à mobilité réduite ou handicapée ou un enfant, en position debout sur une piste enneigée, comprenant :
- un premier ski et un deuxième ski qui s'étendent sensiblement parallèlement l'un à l'autre et qui sont destinés à prendre appui sur le sol, les premier et deuxième skis comportant respectivement un premier dispositif de fixation de chaussure de ski et un deuxième dispositif de fixation de chaussure de ski,
- un premier pied de fixation avant et un premier pied de fixation arrière fixés sur le premier ski respectivement à l'avant et à l'arrière du premier dispositif de fixation de chaussure de ski, et un deuxième pied de fixation avant et un deuxième pied de fixation arrière fixés sur le deuxième ski respectivement à l'avant et à l'arrière du deuxième dispositif de fixation de chaussure de ski,
- une poutre longitudinale,
- un manche de prise de carres qui est fixé à une partie avant de la poutre longitudinale et qui est configuré pour être manipulé par la personne transportée et/ou un accompagnateur de la personne transportée, et
- un système de liaison configuré pour relier la poutre longitudinale aux premier et deuxième pieds de fixation avant et aux premier et deuxième pieds de fixation arrière, le système de liaison comportant au moins :
   - une première bielle avant et une deuxième bielle avant s'étendant transversalement à la poutre longitudinale, les premier et deuxième pieds de fixation avant et les première et deuxième bielles avant formant un parallélogramme déformable, chacune des première et deuxième bielles avant comportant une portion médiane montée pivotante sur la poutre longitudinale autour d'un axe d'articulation avant respectif et des première et deuxième portions d'extrémité qui sont reliées respectivement aux premier et deuxième pieds de fixation avant par des liaisons à rotule avant respectives, et
   - une bielle arrière s'étendant transversalement à la poutre longitudinale, la bielle arrière comportant une portion médiane montée pivotante sur la poutre longitudinale autour d'un axe d'articulation arrière et des première et deuxième portions d'extrémité reliées respectivement aux premier et deuxième pieds de fixation arrière par des liaisons à rotule arrière respectives,
les axes d'articulation avant et arrière étant chacun configurés pour s'étendre obliquement vers l'avant et vers le bas lorsque les semelles des premier et deuxième skis reposent sur un support horizontal.

Une telle configuration du dispositif de transport non motorisé selon la présente invention, et en particulier du système de liaison, entraîne, durant un virage lors d'une descente sur une piste enneigée, non seulement un déplacement différentiel vertical entre les premiers et deuxièmes skis, mais également un déplacement différentiel longitudinal entre les premiers et deuxièmes skis. Ainsi, en traversée de pente, le ski amont est déplacé vers l'avant par rapport au ski aval.

Ces dispositions permettent de faciliter la prise de virage pour la personne transportée, et donc d'assurer une maniabilité et une sécurité élevées au dispositif de transport selon l'invention quelle que soit l'importance de la pente de la descente empruntée avec le dispositif de transport, et quels que soient les rayons de courbure des virages effectués.

De plus, l'interposition de liaisons à rotule entre les premier et deuxième pieds de fixation avant et les première et deuxième bielle avant et entre les premier et deuxième pieds de fixation arrière et la bielle arrière permet à chacun des premier et deuxième skis de pouvoir basculer vers l'avant et vers l'arrière de façon indépendante (c'est-à-dire indépendamment de l'autre des premier et deuxième skis) et de pouvoir se cintrer longitudinalement. Ces dispositions permettent ainsi aux premier et deuxième skis de pouvoir s'adapter aux déformations du terrain rencontré par le dispositif de transport, ce qui limite grandement l'usure du système de liaison et les risques de rupture de ce dernier et/ou des premier et deuxième skis.

Ainsi, la présence des différentes liaisons à rotule augmente encore la sécurité d'utilisation du dispositif de transport selon la présente invention.

Le dispositif de transport non motorisé peut en outre présenter une ou plusieurs des caractéristiques suivantes, prises seules ou en combinaison.

Selon un mode de réalisation de l'invention, les semelles des premier et deuxième skis sont configurées pour s'étendre sensiblement parallèlement l'une à autre quel que soit l'angle d'inclinaison du manche de prises de carres.

Selon un mode de réalisation de l'invention, le dispositif de transport non motorisé est configuré pour permettre à une personne, notamment un enfant ou une personne à mobilité réduite ou handicapée, de pratiquer le ski debout.

Selon un mode de réalisation de l'invention, la poutre longitudinale s'étend sensiblement parallèlement aux premier et deuxième skis.

Selon un mode de réalisation de l'invention, lorsque les semelles des premier et deuxième skis reposent sur un support horizontal, les axes d'articulation avant et arrière sont inclinés par rapport à l'horizontale d'un angle compris entre 20 et 60°, et par exemple entre 40 et 50°.

Selon un mode de réalisation de l'invention, chacun des premier et deuxième pieds de fixation avant et arrière est configuré pour s'étendre obliquement vers l'avant et vers le haut lorsque les semelles des premier et deuxième skis reposent sur un support horizontal.

Selon un mode de réalisation de l'invention, les première et deuxième bielles avant sont configurées pour pivotées dans une premier plan de pivotement et la bielle arrière est configurée pour pivoter dans une deuxième plan de pivotement qui est sensiblement parallèle au premier plan de pivotement.

Selon un mode de réalisation de l'invention, le manche de prise de carres est équipé d'un guidon principal destiné à être saisi par la personne transportée et/ou un accompagnateur de la personne transportée.

Selon un mode de réalisation de l'invention, le manche de prise de carres est configuré pour s'étendre sensiblement verticalement lorsque les semelles des premier et deuxième skis reposent sur un support horizontal.

Selon un mode de réalisation de l'invention, le guidon principal présente une largeur supérieure à la distance maximale séparant les bord longitudinaux externes des premier et deuxième skis.

Selon un mode de réalisation de l'invention, les première et deuxième bielles avant et la bielle arrière sont chacune cintrées en arc de cercle.

Selon un mode de réalisation de l'invention, le dispositif de transport non motorisé comporte en outre un guidon additionnel qui est fixé de manière amovible à une partie arrière de la poutre longitudinale.

Selon un mode de réalisation de l'invention, la bielle arrière et les première et deuxième bielles avant présentent des largeurs identiques. De façon avantageuse, la bielle arrière et les première et deuxième bielles avant sont identiques.

Selon un mode de réalisation de l'invention, les premier et deuxième skis sont configurés pour s'étendre, de préférence de manière symétrique, de part et d'autre de la poutre longitudinale lorsque les semelles des premier et deuxième skis reposent sur un support horizontal.

Selon un mode de réalisation de l'invention, la poutre longitudinale s'étend dans un plan longitudinal médian du dispositif de transport non motorisé lorsque les semelles des premier et deuxième skis reposent sur un support horizontal.

Selon un mode de réalisation de l'invention, la poutre longitudinale comporte une partie de poutre principale qui s'étend selon une direction d'extension qui est sensiblement parallèle aux premier et deuxième skis. De façon avantageuse, la direction d'extension est sensiblement horizontale lorsque les semelles des premier et deuxième skis reposent sur un support horizontal.

Selon un mode de réalisation de l'invention, la partie de poutre principale est rectiligne.

Selon un mode de réalisation de l'invention, la partie de poutre principale présente une section transversale circulaire. Néanmoins, la partie de poutre principale pourrait présenter une section transversale d'une toute autre forme, et par exemple rectangulaire, oblongue, carrée ou encore ovale.

Selon un mode de réalisation de l'invention, la poutre longitudinale comporte en outre une patte de fixation arrière sur laquelle est montée pivotante la portion médiane de la bielle arrière et une patte de fixation avant sur laquelle sont montées pivotantes les portions médianes des première et deuxième bielles avant. De façon avantageuse, la patte de fixation arrière est fixée à une portion d'extrémité arrière de la partie de poutre principale, et la patte de fixation avant est fixée à une portion d'extrémité avant de la partie de poutre principale.

Selon un mode de réalisation de l'invention, les pattes de fixation avant et arrière sont chacune configurées pour s'étendre obliquement par rapport à l'horizontale lorsque les semelles des premier et deuxième skis reposent sur un support horizontal.

Selon un mode de réalisation de l'invention, les pattes de fixation avant et arrière sont configurées pour s'étendre dans le plan longitudinal médian du dispositif de transport non motorisé lorsque les semelles des premier et deuxième skis reposent sur un support horizontal.

Selon un mode de réalisation de l'invention, la première bielle avant et la bielle arrière sont configurées pour être située en-dessous de la partie de poutre principale lorsque les semelles des premier et deuxième skis reposent sur un support horizontal.

Selon un mode de réalisation de l'invention, la deuxième bielle avant est configurée pour être située au-dessus de la partie de poutre principale lorsque les semelles des premier et deuxième skis reposent sur un support horizontal.

Selon un mode de réalisation de l'invention, chacune des liaisons à rotule avant et arrière comporte un premier organe de liaison comprenant une première partie de montage fixée à une bielle respective parmi les première et deuxième bielles avant et la bielle arrière, et un deuxième organe de liaison comprenant une deuxième partie de montage fixée à un pied de fixation respectif parmi les premier et deuxième pied de fixation avant et arrière.

Selon un mode de réalisation de l'invention, les première et deuxième parties de montage de chacune des liaisons à rotule avant et arrière sont orientées sensiblement à 90° l'une par rapport à l'autre lorsque les semelles des premier et deuxième skis reposent sur un support horizontal.

Selon un mode de réalisation de l'invention, le premier organe de liaison de chacune des liaisons à rotule avant et arrière comporte une tête sphérique et le deuxième organe de liaison de chacune des liaisons à rotule avant et arrière comporte une cavité sphérique dans laquelle est engagée la tête sphérique respective.

Selon un mode de réalisation de l'invention, le deuxième organe de liaison de chacune des liaisons à rotule avant et arrière comporte une bague externe solidaire de la deuxième partie de montage respective et une bague interne qui est montée articulée dans la bague externe respective et qui délimite un passage dans lequel est reçu le premier organe de liaison respectif.

Selon un mode de réalisation de l'invention, les largeurs des première et deuxième bielles avant et de la bielle arrière peuvent varier en fonction de la taille de la personne transportée. Par exemepls, trois tailles différentes de bielle avant et bielle arrière peuvent être définis.

La présente invention sera bien comprise à l'aide de la description qui suit en référence aux figures annexées, dans lesquelles des signes de références identiques correspondent à des éléments structurellement et/ou fonctionnellement identiques ou similaires.
[Fig 1] Figure 1 est une vue en perspective d'un dispositif de transport non motorisé selon un premier mode de réalisation de la présente invention.
[Fig 2] Figure 2 est une vue de côté du dispositif de transport non motorisé de la figure 1.
[Fig 3] Figure 3 est une vue de face du dispositif de transport non motorisé de la figure 1.
[Fig 4] Figure 4 est une vue de dessus du dispositif de transport non motorisé de la figure 1.
[Fig 5] Figure 5 est une vue partielle en perspective du dispositif de transport non motorisé de la figure 1.
[Fig 6] Figure 6 est une vue en perspective du dispositif de transport non motorisé de la figure 1 équipé d'un guidon additionnel.
[Fig 7] Figure 7 est une vue en perspective du dispositif de transport non motorisé de la figure 1 montrant une prise de carres à droite.
[Fig 8] Figure 8 est une vue en perspective du dispositif de transport non motorisé de la figure 1 montrant une prise de carres à gauche.
[Fig 9] Figure 9 est une vue partielle en perspective d'un dispositif de transport non motorisé selon un deuxième mode de réalisation de l'invention.

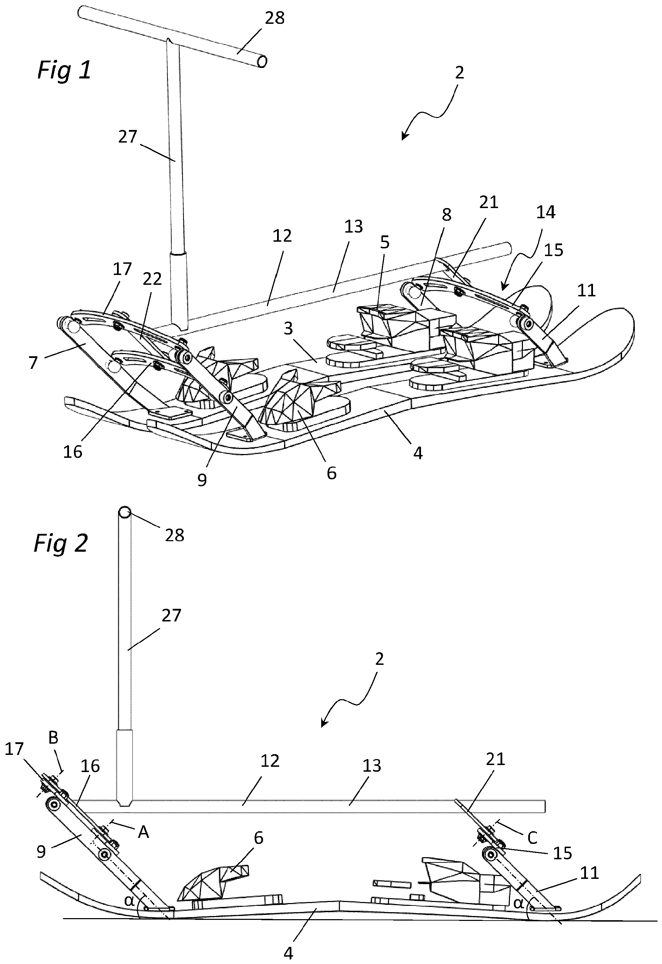

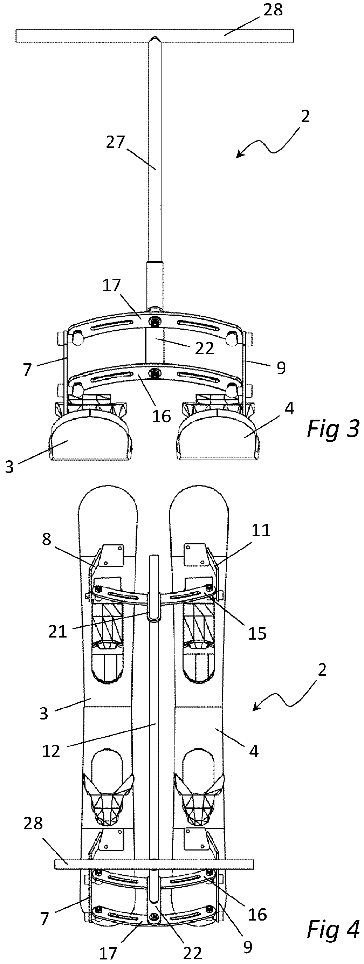

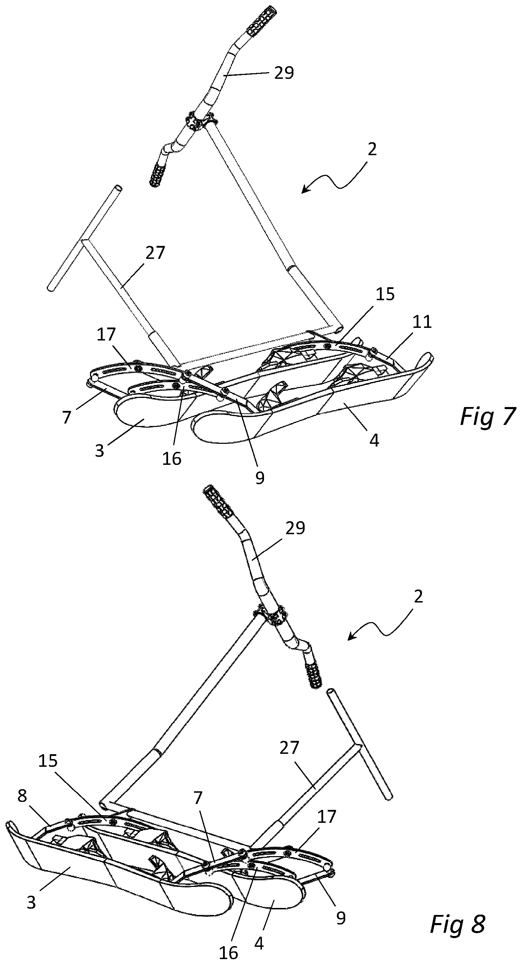

Les figures 1 à 8 représentent un dispositif de transport non motorisé 2 pour transporter une personne, et par exemple une personne à mobilité réduite ou handicapée ou encore un enfant, en position debout sur une piste enneigée. Le dispositif de transport non motorisé 2 est plus particulièrement configuré pour permettre à une personne de pratiquer le ski debout.

Le dispositif de transport non motorisé 2 comprend un premier ski 3 et un deuxième ski 4 qui s'étendent sensiblement parallèlement l'un à l'autre et qui sont destinés à prendre appui sur le sol. Les premier et deuxième skis 3, 4 comportent respectivement un premier dispositif de fixation de chaussure de ski 5 et un deuxième dispositif de fixation de chaussure de ski 6.

Le dispositif de transport non motorisé 2 comprend en outre un premier pied de fixation avant 7 et un premier pied de fixation arrière 8 fixés sur le premier ski 3 respectivement à l'avant et à l'arrière du premier dispositif de fixation de chaussure de ski 5, et un deuxième pied de fixation avant 9 et un deuxième pied de fixation arrière 11 fixés sur le deuxième ski 4 respectivement à l'avant et à l'arrière du deuxième dispositif de fixation de chaussure de ski 6.

Comme montré plus particulièrement sur les figures 1 et 2, les premier et deuxième pieds de fixation avant 7, 9 et les premier et deuxième pieds de fixation arrière 8, 11 sont configurés pour s'étendre obliquement vers l'avant et vers le haut lorsque les semelles des premier et deuxième skis 3, 4 reposent sur un support horizontal. De façon avantageuse, lorsque les semelles des premier et deuxième skis 3, 4 reposent sur un support horizontal, chacun des premier et deuxième pieds de fixation avant et arrière est incliné par rapport à l'horizontale d'un angle d'inclinaison α compris entre 20 et 60°, et de préférence entre 40 et 50°, et par exemple d'environ 45°.

Le dispositif de transport non motorisé 2 comprend de plus une poutre longitudinale 12 s'étendant sensiblement parallèlement aux premier et deuxième skis 3, 4. De façon avantageuse, la poutre longitudinale 12 s'étend dans un plan longitudinal médian du dispositif de transport non motorisé 2 lorsque les semelles des premier et deuxième skis 3, 4 reposent sur un support horizontal, et les premier et deuxième skis 3, 4 sont configurés pour s'étendre symétriquement de part et d'autre de la poutre longitudinale 12 lorsque les semelles des premier et deuxième skis reposent sur un support horizontal.

Selon le mode de réalisation représenté sur les figures 1 à 8, la poutre longitudinale 12 comporte une partie de poutre principale 13 qui est rectiligne et qui s'étend selon une direction d'extension qui est sensiblement parallèle aux premier et deuxième skis 3, 4. De façon avantageuse, la partie de poutre principale 13 présente une section transversale circulaire, et la direction d'extension de la partie de poutre principale 13 est sensiblement horizontale lorsque les semelles des premier et deuxième skis 3, 4 reposent sur un support horizontal.

Le dispositif de transport non motorisé 2 comprend également un système de liaison 14 configuré pour relier la poutre longitudinale 12 aux premier et deuxième pieds de fixation avant 7, 9 et aux premier et deuxième pieds de fixation arrière 8, 11.

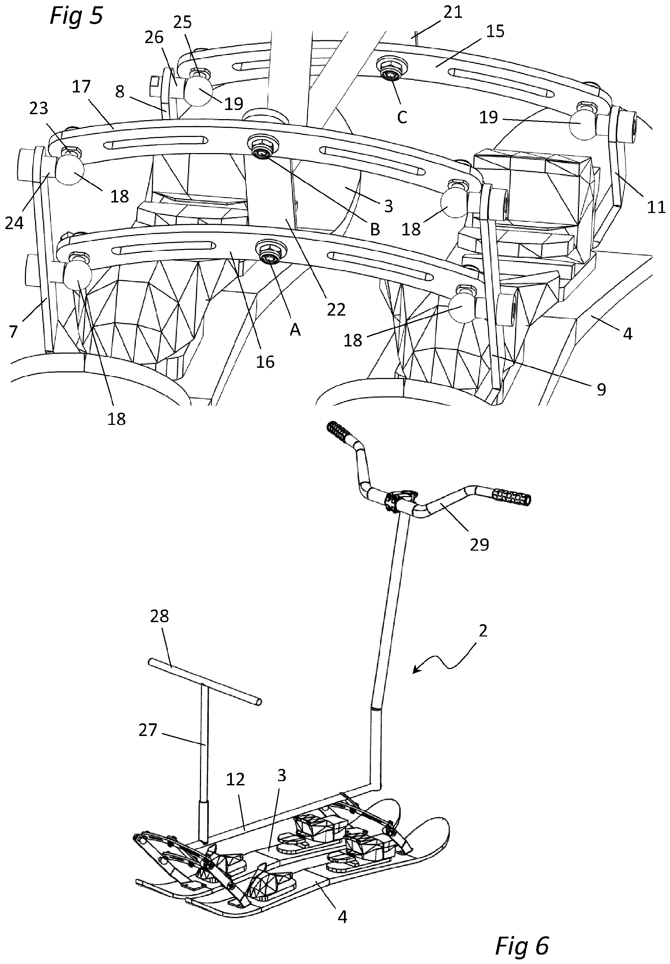

Le système de liaison 14 comporte une bielle arrière 15 s'étendant transversalement à la poutre longitudinale 12, et une première bielle avant 16 et une deuxième bielle avant 17 s'étendant également transversalement à la poutre longitudinale 12. Comme montré plus particulièrement sur la figure 5, les premier et deuxième pieds de fixation avant 7, 9 et les première et deuxième bielles avant 16, 17 forment un parallélogramme déformable dont le fonctionnement sera décrit plus en détails ci-après.

Comme montré sur la figure 2, la première bielle avant 16 et la bielle arrière 15 sont configurées pour être située en-dessous de la partie de poutre principale 13 lorsque les semelles des premier et deuxième skis 3, 4 reposent sur un support horizontal, et la deuxième bielle avant 17 est configurée pour être située au-dessus de la partie de poutre principale 13 lorsque les semelles des premier et deuxième skis 3, 4 reposent sur un support horizontal.

Selon le mode de réalisation représenté sur les figures 1 à 8, les première et deuxième bielles avant 16, 17 et la bielle arrière 15 sont chacune cintrées en arc de cercle. Cependant, les première et deuxième bielles avant 16, 17 et la bielle arrière 15 pourraient présenter une toute autre forme, et par exemple une forme générale de V inversé ou de M.

Comme montré plus particulièrement sur les figures 2 et 5, chacune des première et deuxième bielle avant 16, 17 comporte une portion médiane montée pivotante sur la poutre longitudinale 12 autour d'un axe d'articulation avant A, B respectif, et des première et deuxième portions d'extrémité qui sont reliées respectivement aux premier et deuxième pieds de fixation avant 7, 9 par des liaisons à rotule avant 18 respectives. La bielle arrière 15 comporte également une portion médiane montée pivotante sur la poutre longitudinale 12 autour d'un axe d'articulation arrière C, et des première et deuxième portions d'extrémité reliées respectivement aux premier et deuxième pieds de fixation arrière 8, 11 par des liaisons à rotule arrière 19 respectives.

Comme montré plus particulièrement sur la figure 2, les axes d'articulation avant A, B et l'axe d'articulation arrière C sont chacun configurés pour s'étendre obliquement vers l'avant et vers le bas lorsque les semelles des premier et deuxième skis 3, 4 reposent sur un support horizontal. De façon avantageuse, lorsque les semelles des premier et deuxième skis 3, 4 reposent sur un support horizontal, les axes d'articulation avant et arrière A, B, C sont inclinés par rapport à l'horizontale d'un angle compris entre 20 et 60°, et de préférence entre 40 et 50°, et par exemple d'environ 45°.

Comme montré également sur la figure 2, les première et deuxième bielles avant 16, 17 sont configurées pour pivotées dans une premier plan de pivotement, et la bielle arrière 15 est configurée pour pivoter dans une deuxième plan de pivotement qui est sensiblement parallèle au premier plan de pivotement.

Selon le mode de réalisation représenté sur les figures 1 à 8, la poutre longitudinale 12 comporte une patte de fixation arrière 21 sur laquelle est montée pivotante la portion médiane de la bielle arrière 15, et une patte de fixation avant 22 sur laquelle sont montées pivotantes les portions médianes des première et deuxième bielles avant 16, 17. Comme montré plus particulièrement sur la figure 1, la patte de fixation arrière 21 est fixée à une portion d'extrémité arrière de la partie de poutre principale 13, et la patte de fixation avant 22 est fixée à une portion d'extrémité avant de la partie de poutre principale 13.

Les pattes de fixation arrière et avant 21, 22 sont chacune configurées pour s'étendre obliquement par rapport à l'horizontale lorsque les semelles des premier et deuxième skis 3, 4 reposent sur un support horizontal. De façon avantageuse, lorsque les semelles des premier et deuxième skis 3, 4 reposent sur un support horizontal, les pattes de fixation arrière et avant 21, 22 sont inclinées par rapport à l'horizontale d'un angle d'inclinaison compris entre 20 et 60°, et de préférence entre 40 et 50°, et par exemple d'environ 45°.

Comme montré plus particulièrement sur la figure 5, les liaisons à rotule avant et arrière 18, 19 sont identiques. En particulier, chacune des liaisons à rotule avant 18 comporte un premier organe de liaison avant 23 comprenant une première partie de montage avant fixée à une bielle respective parmi les première et deuxième bielles avant 16, 17, et un deuxième organe de liaison avant 24 comprenant une deuxième partie de montage avant fixée à un pied de fixation respectif parmi les premier et deuxième pied de fixation avant 7, 9, et chacune des liaisons à rotule arrière 19 comporte un premier organe de liaison arrière 25 comprenant une première partie de montage arrière fixée à la bielle arrière 15, et un deuxième organe de liaison arrière 26 comprenant une deuxième partie de montage arrière fixée à un pied de fixation respectif parmi les premier et deuxième pied de fixation arrière 8, 11.

De façon avantageuse, les première et deuxième parties de montage avant de chacune des liaisons à rotule avant 18 sont orientées sensiblement à 90° l'une par rapport à l'autre lorsque les semelles des premier et deuxième skis 3, 4 reposent sur un support horizontal, et les première et deuxième parties de montage arrière de chacune des liaisons à rotule arrière 19 sont orientées sensiblement à 90° l'une par rapport à l'autre lorsque les semelles des premier et deuxième skis 3, 4 reposent sur un support horizontal.

Selon le mode de réalisation représenté sur les figures 1 à 8, le premier organe de liaison avant 23 de chaque liaison à rotule avant 18 comporte une tête sphérique (non visible sur les figures), et le deuxième organe de liaison avant 24 de chaque liaison à rotule avant 18 comporte une cavité sphérique (non visible sur les figures) dans laquelle est engagée la tête sphérique respective. De façon similaire, le premier organe de liaison arrière 25 de chaque liaison à rotule arrière 19 comporte également une tête sphérique (non visible sur les figures), et le deuxième organe de liaison arrière 26 de chaque liaison à rotule arrière 19 comporte une cavité sphérique (non visible sur les figures) dans laquelle est engagée la tête sphérique respective.

Le dispositif de transport non motorisé 2 comprend de plus un manche de prise de carres 27 qui est fixé à une partie avant de la poutre longitudinale 12, et plus particulièrement de la partie de poutre principale 13, et qui est configuré pour être manipulé par la personne transportée par le dispositif de transport non motorisé 2. Le manche de prise de carres 27 est avantageusement équipé, en partie supérieure, d'un guidon principal 28 destiné à être saisi par la personne transportée.

Selon le mode de réalisation représenté sur les figures 1 à 8, le manche de prise de carres 27 est configuré pour s'étendre sensiblement verticalement lorsque les semelles des premier et deuxième skis 3, 4 reposent sur un support horizontal, et le guidon principal 28 présente avantageusement une largeur supérieure à la distance maximale séparant les bord longitudinaux externes des premier et deuxième skis 3, 4 lorsque les semelles des premier et deuxième skis 3, 4 reposent sur un support horizontal.

Comme montré sur la figure 6, le dispositif de transport non motorisé 2 peut également comporter un guidon additionnel 29 qui est fixé de manière amovible à une partie arrière de la poutre longitudinale 12, et qui est configuré pour être saisi par un accompagnateur de la personne transportée de manière à guider les déplacements du dispositif de transport non motorisé 2.

De façon avantageuse, les semelles des premier et deuxième skis 3, 4 sont configurées pour s'étendre sensiblement parallèlement l'une à autre quel que soit l'angle d'inclinaison du manche de prises de carres 27.

Le fonctionnement du dispositif de transport non motorisé 2 selon la présente invention va maintenant être décrit lors d'une traversée de pente.

Lorsque la personne transportée par le dispositif de transport non motorisé 2 souhaite tournée à gauche afin d'effectuer une traversée de pente, ladite personne incline le manche de prise de carres 27 vers la gauche, ce qui induit une déformation du parallélogramme déformable, formé par les premier et deuxième pieds de fixation avant 7, 8 et les première et deuxième bielle avant 16, 17, telle que les premier et deuxième skis 3, 4 pivotent pour permettre une prise de carres à gauche, telle que le deuxième ski 4 se retrouve surélevée par rapport au premier ski 3, et enfin telle que le deuxième ski 4 est déplacé longitudinalement vers l'avant par rapport au premier ski 3.

De façon similaire, lorsque la personne transportée par le dispositif de transport non motorisé 2 souhaite tournée à droite afin d'effectuer une traversée de pente, ladite personne incline le manche de prise de carres 27 vers la droite, ce qui induit une déformation du parallélogramme déformable, formé par les premier et deuxième pieds de fixation avant 7, 8 et les première et deuxième bielle avant 16, 17, telle que les premier et deuxième skis 3, 4 pivotent pour permettre une prise de carres à droite, telle que le premier ski 3 se retrouve surélevée par rapport au deuxième ski 4, et enfin telle que le premier ski 3 est déplacé longitudinalement vers l'avant par rapport au deuxième ski 4.

Ainsi, par un simple actionnement du manche de prise de carres 27, la personne transportée par le dispositif de transport non motorisé 2 peut aisément piloter le dispositif de transport non motorisé 2, tout en ayant un conforme de glisse optimisé.

De plus, la présence des liaisons à rotule avant et arrière 18, 19 permet à chacun des premier et deuxième skis 3, 4 de pouvoir basculer vers l'avant et vers l'arrière de façon indépendante, et donc de pouvoir s'adapter aux déformations du terrain rencontré par le dispositif de transport non motorisé 2, ce qui limite grandement l'usure du système de liaison 14 et les risques de rupture de ce dernier et/ou des premier et deuxième skis 3, 4.

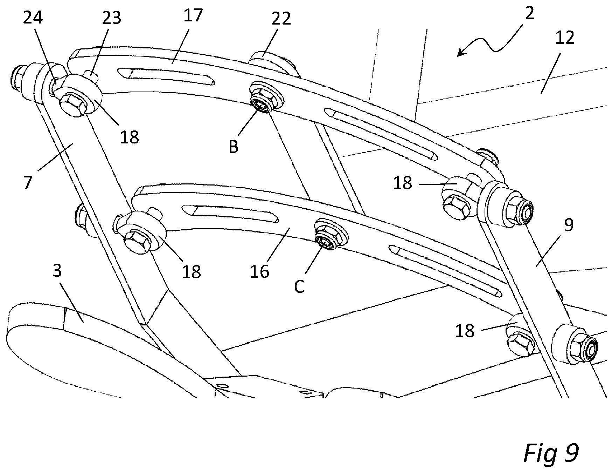

La figure 9 représente un dispositif de transport non motorisé 2 selon un deuxième mode de réalisation de l'invention qui diffère du premier mode de réalisation représenté sur les figures 1 à 8 essentiellement en ce que le deuxième organe de liaison avant 24 de chacune des liaisons à rotule avant 18 comporte une bague externe solidaire de la deuxième partie de montage respective et une bague interne qui est montée articulée dans la bague externe respective et qui délimite un passage dans lequel est reçu le premier organe de liaison avant 23 respectif. De façon similaire, le deuxième organe de liaison arrière 26 de chacune des liaisons à rotule arrière 19 pourrait également comporter une bague externe solidaire de la deuxième partie de montage respective et une bague interne qui est montée articulée dans la bague externe respective et qui délimite un passage dans lequel est reçu le premier organe de liaison arrière 25 respectif.

Comme il va de soi, l'invention ne se limite pas aux seules formes d'exécution de ce dispositif de transport non motorisé 2, décrites ci-dessus à titre d'exemples, elle en embrasse au contraire toutes les variantes de réalisation.

## Revendications

1. Dispositif de transport non motorisé (2) pour transporter une personne en position de debout sur une piste enneigée, comprenant :
- un premier ski (3) et un deuxième ski (4) qui s'étendent sensiblement parallèlement l'un à l'autre et qui sont destinés à prendre appui sur le sol, les premier et deuxième skis (3, 4) comportant respectivement un premier dispositif de fixation de chaussure de ski et un deuxième dispositif de fixation de chaussure de ski,
- un premier pied de fixation avant (7) et un premier pied de fixation arrière (8) fixés sur le premier ski (3) respectivement à l'avant et à l'arrière du premier dispositif de fixation de chaussure de ski, et un deuxième pied de fixation avant (9) et un deuxième pied de fixation arrière (11) fixés sur le deuxième ski (4) respectivement à l'avant et à l'arrière du deuxième dispositif de fixation de chaussure de ski,
- une poutre longitudinale (12),
- un manche de prise de carres (27) qui est fixé à une partie avant de la poutre longitudinale (12) et qui est configuré pour être manipulé par la personne transportée, et
- un système de liaison (14) configuré pour relier la poutre longitudinale (12) aux premier et deuxième pieds de fixation avant (7, 9) et aux premier et deuxième pieds de fixation arrière (8, 11), le système de liaison (14) comportant au moins :
- une première bielle avant (16) et une deuxième bielle avant (17) s'étendant transversalement à la poutre longitudinale (12), les premier et deuxième pieds de fixation avant (7, 9) et les première et deuxième bielles avant (16, 17) formant un parallélogramme déformable, chacune des première et deuxième bielles avant (16, 17) comportant une portion médiane montée pivotante sur la poutre longitudinale (12) autour d'un axe d'articulation avant (A, B) respectif et des première et deuxième portions d'extrémité qui sont reliées respectivement aux premier et deuxième pieds de fixation avant (7, 9) par des liaisons à rotule avant (18) respectives, et
- une bielle arrière (15) s'étendant transversalement à la poutre longitudinale (12), la bielle arrière (15) comportant une portion médiane montée pivotante sur la poutre longitudinale (12) autour d'un axe d'articulation arrière (C) et des première et deuxième portions d'extrémité reliées respectivement aux premier et deuxième pieds de fixation arrière (8, 11) par des liaisons à rotule arrière (19) respectives,
les axes d'articulation avant et arrière (A, B, C) étant chacun configurés pour s'étendre obliquement vers l'avant et vers le bas lorsque les semelles des premier et deuxième skis (3, 4) reposent sur un support horizontal.

2. Dispositif de transport non motorisé (2) selon la revendication 1, dans lequel, lorsque les semelles des premier et deuxième skis (3, 4) reposent sur un support horizontal, les axes d'articulation avant et arrière (A, B, C) sont inclinés par rapport à l'horizontale d'un angle compris entre 20 et 60°, et par exemple entre 40 et 50°.

3. Dispositif de transport non motorisé (2) selon la revendication 1 ou 2, dans lequel chacun des premier et deuxième pieds de fixation avant et arrière (7, 8, 9, 11) est configuré pour s'étendre obliquement vers l'avant et vers le haut lorsque les semelles des premier et deuxième skis (3, 4) reposent sur un support horizontal.

4. Dispositif de transport non motorisé (2) selon l'une quelconque des revendications 1 à 3, dans lequel les première et deuxième bielles avant (16, 17) sont configurées pour pivotées dans une premier plan de pivotement, et la bielle arrière (15) est configurée pour pivoter dans une deuxième plan de pivotement qui est sensiblement parallèle au premier plan de pivotement.

5. Dispositif de transport non motorisé (2) selon l'une quelconque des revendications 1 à 4, dans lequel le manche de prise de carres (27) est configuré pour s'étendre sensiblement verticalement lorsque les semelles des premier et deuxième skis (3, 4) reposent sur un support horizontal.

6. Dispositif de transport non motorisé (2) selon l'une quelconque des revendications 1 à 5, dans lequel le manche de prise de carres (27) est équipé d'un guidon principal (28) destiné à être saisi par la personne transportée.

7. Dispositif de transport non motorisé (2) selon la revendication 6, dans lequel le guidon principal (28) présente une largeur supérieure à la distance maximale séparant les bord longitudinaux externes des premier et deuxième skis (3, 4).

8. Dispositif de transport non motorisé (2) selon l'une quelconque des revendications 1 à 7, dans lequel les première et deuxième bielles avant (16, 17) et la bielle arrière (15) sont chacune cintrées en arc de cercle.

9. Dispositif de transport non motorisé (2) selon l'une quelconque des revendications 1 à 8, lequel comporte en outre un guidon additionnel (29) qui est fixé de manière amovible à une partie arrière de la poutre longitudinale (12).
